# EUROPEAN PATENT APPLICATION

(11) **EP 2 042 662 A2**
(43) Date of publication of application: **01.04.2009**
(21) Application number: 07765865.6
(22) Date of filing: 16.05.2007
(51) Int. Cl.: E03B 11/00, B65D 88/34, E03B 3/02

(54) **FIXED SHADING COVER SYSTEM FOR COUNTERACTING EVAPORATION**

(30) Priority: 16.05.2006 ES 200601249
(71) Applicant: Atarfil, S.L., 18230 Atarfe Granada (ES)
(72) Inventor: GARCIA GIRONES, Mario, 18230 Atarfe (Granada) (ES)
(74) Representative: Gonzalez-Alberto Rodriguez, Natalia
(86) International application number: PCT/ES2007/000282
(87) International publication number: WO 2007/132047

(57) **Abstract**

The invention relates to a fixed cover system for counteracting evaporation, consisting of a shading mesh and a system of synthetic support lines (6, 7, 8). The system is formed by a first level of support lines (6) on which the shading mesh is placed. The second support level is formed by lines (8) placed between the two layers that form the shading mesh. The third support layer (7) is that which is placed above the shading mesh in order to obviate fluctuations in the shading mesh owing to the wind. The shading mesh is formed by two layers (9, 10) the specific design of which provides a high level of shading and high permeability to rainwater.

## Description

### Object of the Invention

The present invention relates to a fixed shading cover system for counteracting water evaporation, mainly used in basins and the function of which is usually irrigation water storage, as well as in deposits and other installations or structures intended to contain fluids.

The present invention also relates to a shading mesh specifically designed to achieve a high shading percentage and a high degree of permeability to rainwater.

### State of the Art

As is known, restrictions in the use of water for agricultural use in warm areas are increasingly greater, which has led many farmers to use basins or reservoirs to collect and accumulate rainwater and to subsequently be able to use it as irrigation water.

The drawback of this type of basins is that if they are not well covered against the action of rays of sunlight, the latter give rise to very significant losses in the accumulated water volume due to the evaporation caused by such rays.

There are several methods and elements in the state of the art which are used as a protective means for counteracting water evaporation from reservoirs and against the penetration of impurities in said water.

For example, geomembranes have been used for the purpose of covering reservoirs and thus preventing water evaporation. This type of covers prevents water evaporation and contamination, but the drawback is that they do not allow permeability to rainwater due to the material from which they are manufactured.

Another type of covers for water reservoirs based on a shading mesh are those described in Spanish utility model applications with application numbers ES1044874U-A1 and ES-1058957-A1.

Utility model ES-1044874U-A1 describes a cover formed by a structure of steel cables or wires forming grids with different measurements for holding a permeable or impermeable shading sheet, a framework of cable grids being placed in its assembly at the lower part of the shading sheet and another framework at the upper part, the shading sheet being located in an intermediate position held between the two frameworks.

Utility model ES-1058957-A1 consists of placing a shading sheet which can be permeable or impermeable, interlocked in a structure formed by steel cables and wires which are longitudinally arranged equidistant to one another and parallel to one of the side of the reservoir to be covered, another run of steel cables or wires being placed above this interlocked sheet in a manner perpendicular to the previous one, the sheet being held between the steel cables or wires thus preventing it from moving.

The drawback of this type of covers is that the shading capacity or percentage of the cover is inversely proportional to permeability to rainwater, such that if a high degree of shading is desired, to prevent water evaporation to a greater extent, a material with a low void content must be used, which causes said material to have a low permeability to rainwater, or in other words, a large part of said rainwater cannot be collected since the cover is impermeable.

If in contrast, a material with a higher void content and therefore a higher permeability to rainwater is chosen, such material will have a low shading percentage against rays of sunlight, facilitating the evaporation of the water contained in the basin.

In addition, the steel wires or cables used in both utility models have a low long-term durability due to the oxidation occurring therein since they are in a humid environment, affecting water quality. Said cables further have low flexibility, high weight, they are deformed due to thermal expansion, their handling is complicated and sometimes even hazardous, having abrasion problems with the anchors to which they are secured, all of which makes them unsuitable for this type of installations.

### Description of the Invention

The cover system for basins proposed by the invention fully and satisfactorily solves the previously discussed drawbacks in the different mentioned aspects, having a high shading percentage against different angles of incidence of solar radiation, as well as a high rainwater draining capacity, with high weather durability and mechanical strength.

The system can be applied to any type of element or structure for containing fluids, as well as for those requiring a shading cover, among which the following must be emphasized:
- Basins waterproofed with a geomembrane to contain both water and other fluids.
- Concrete tanks.
- Corrugated sheet tanks.
- Parking lots, canopies, etc.

To that end and more specifically, the described fixed shading cover system for counteracting evaporation is formed by a shading mesh designed to provide a high shading percentage, which mesh is supported from the perimeter of the basin by means of a system of synthetic strips, cables or lines (hereinafter they will generally be called support lines).

The elements forming the fixed shading cover system for counteracting evaporation are; a shading mesh, a series of support lines, a perimetric line anchor and a perimetric closure.

The shading mesh is designed such that it allows a high shading percentage (even 97% with different angles of incidence), and simultaneously a high rainwater draining capacity. Its design allows draining maximum precipitations in return periods greater than 10 years (10 liters/m²/min).

The material with which the shading mesh is manufactured is polyethylene PE. This material provides it with high mechanical strength, necessary for the function it will carry out inside the cover system assembly. Given that the shading mesh will be exposed to great temperature variations it has been provided with protection against UV radiation with carbon black, thus achieving high weather durability.

The shading mesh is designed as an assembly of two sewn layers, which allows it to maintain assembly integrity. The upper layer has bands with a high shading percentage, i.e. with a lower void content, contiguous to other bands with high permeability to rainwater, i.e. with a higher void content. The lower layer is formed by bands that are overlaid in a reversed manner to those of the upper layer. Inside the shading mesh there are auxiliary lines included during its manufacture and which allow placing the intermediate support lines between the two layers of the shading mesh. The different shading mesh cloths which will be used to completely cover the basin can be overlapped or joined by means of staples, wires, synthetic connections, etc. It is possible for the cover of the reservoir made by means of this shading mesh to have an opening installed to record and inspect the water level.

The support lines are formed by synthetic materials, preferably from high tenacity polyester or polyamide. They can have a section that is simple or combined, by means of braiding or juxtaposed. They are located at three levels: bearing (under the mesh), supporting the mesh (between the two layers of the mesh), safety against wind (above the mesh).

The support lines are anchored to the perimeter of the basin by means of a series of knots to metal tubes. The metal tubes are located around the basin, resting on supporting angle bars. The metal tubes are secured by means of metal profiles which are embedded in reinforced wells or footings made of reinforced concrete that are offset witch respect to the crown of the basin.

The design and sizing of the anchoring elements can vary depending on each specific case; for example, metal runners can be installed in the flanges of the profile instead of metal tube, or wood posts can be used instead of metal profile. The perimetric anchor fulfills a secondary function in the system which is that of transmitting the tension generated by the support lines of the mesh.

The previously described structure is completed with a perimetric curtain which is placed between the shading mesh and the crown level, preventing the wind from circulating freely under it, causing excessive loads in the mesh and entrainment of the steam accumulated under it.

Unlike the state of the art in which there are only two support levels, the lower and upper support levels, the invention described herein incorporates an intermediate support level by means of lines which are placed between the two layers of the shading mesh. With this intermediate level, wires for joining the lines with the mesh or walking on the mesh to place them are not necessary.

Using synthetic cables instead of steel cables as support lines involves greater long-term durability of the lines because oxidation phenomena present in steel are prevented. Other advantages which can be attributed to the use of synthetic lines are their greater flexibility as well as a high durability against heat, moisture and UV radiation. Synthetic lines have better compatibility with the shading mesh because they prevent the possible deterioration of the shading mesh due to the friction of the latter with the steel cables when it moves with the wind. They also have better compatibility with the anchors because they adapt better to the geometry and prevent abrasion problems. In addition, since they have a considerably lower weight than steel cables, they are easier and safer to handle, recovering more easily from possible deformations due to temperature variations. Finally, they are considered to be good insulators because they neither absorb nor conduct heat easily because they have a low coefficient of thermal expansion.

A device is thus achieved which allows better preserving water quality, preventing the dust and solids entrained by the wind from contaminating the water. The maintenance and exploitation of basins is thus simplified given that since the presence of said particles or solids is prevented, the blocking of filter and/or pipe systems associated to the basins is prevented and the shading caused by the cover system prevents algae proliferation. In addition, the salt concentration in the water does not increase due to water loss by evaporation and the aging of the waterproofing geomembranes is reduced since they are not directly exposed to wind and weather.

The present cover system is completely modular, allowing the easy replacement of isolated shading mesh cloths or lines that are damaged. As regards the process followed in the system installation, this can be carried out both if the basin is full or empty. The steps followed in the system installation make it unnecessary for the operators to walk on the mesh at any time to carry out the installation, affecting the safety of the installers and the better operation of the system since unnecessary overtension is not introduced.

### Detailed Description of the Drawings

To complement the description being made and with the aim of aiding to better understand the features of the invention according to a preferred practical embodiment thereof, a set of drawings is attached as an integral part of said description, in which the following has been shown with an illustrative and non-limiting character:

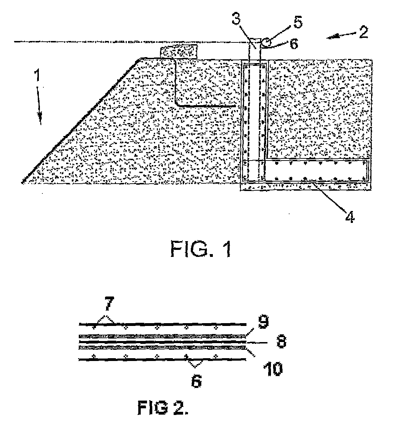

Figure 1 shows a sectional elevational view of a cover system for water basins carried out according to the object of the invention.
Figure 2 shows a longitudinal sectional view of a detail of the mesh and the support cables participating in the cover system of the previous figure.

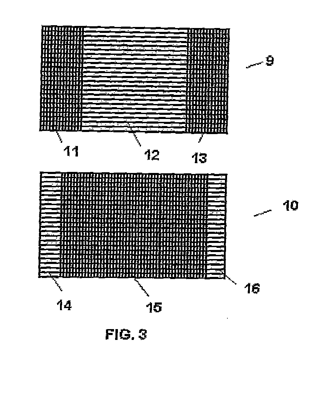

Figure 3 shows a plan detail of the layers participating in the shading mesh of the cover system of the previous figures.

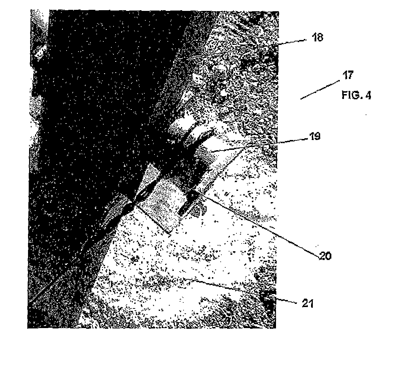

Figure 4 shows a detail of the knots made in the perimetric anchor in the case of using metal runners.

### Description of a Preferred Embodiment

The following description refers to an embodiment of the fixed shading cover system for counteracting evaporation, in which the different steps for installing the cover system as well as an embodiment of the shading mesh to be used in the cover system can be observed in detail.

In view of the indicated figures, it can be observed that the cover system for water basins proposed by the invention comprises a basin or tank (1) containing water, on the perimeter of which there is arranged an anchoring structure (2), which in the chosen practical embodiment is formed as a series of metal profiles (3) embedded in reinforced concrete footings (4), on which profiles there is fixed a metal tube (5) surrounding the perimeter of said basin and resting on supporting angle bars (6), but it could also be formed as any conventional anchoring structure without this affecting the essence of the invention.

In a first step, the lower support lines forming the bearing framework (6) are installed, which lines are tied to the perimetric anchor (2). With this first layer of lower support lines (6), the subsequent extending of the shading mesh is facilitated, the vertical deformation of the system is reduced and a better distribution of lines, and therefore of tension, is allowed.

The design of this first framework of lower support lines (6) optimizes the operation by means of distributing a higher density of lines in the "short" direction (less vertical deformation) and a series of a lines in the "long" direction, supported on the latter, reducing the necking effect (deformation due to their own weight at the edges of the cloths).

After extending the framework of lower support lines (6), the next step is to extend the shading mesh. The cloths are extended according to the shortest direction, which is the one in which less vertical deformation occurs. The different cloths will be overlapped but they can be stapled or sewn.

After extending the shading mesh, the intermediate support lines (8) will be placed. These lines are introduced between the two layers forming the shading mesh with the aid of accessory ropes located between said layers and used as a guide.

The installation of a framework of upper support lines (7) for counteracting the wind above the shading mesh is subsequently necessary. The purpose of this assembly of lines (7) located above of the mesh is to prevent the wind suction from causing exaggerated or unwanted movements in the system. The design of the upper framework (7) for counteracting the wind optimizes the use of the lines, because it coerces the points of maximum deformation of the mesh due to the wind, the latter being the midpoints between lines located between the two layers of the shading mesh.

Finally, the fixed cover system is completed with the perimetric closure which is formed by the shading mesh itself, closing the entire basin perimetrically. This perimetric closure can be adapted to any height and to any shape of the basin and is formed by a small curtain, tied by means of knots to the lines surrounding the basin, In addition, the perimetric closure is tied at the upper and lower parts.

The anchoring (2, 17) of the support lines (6, 7, 8) to the perimeter of the basin is carried out by means of knots (20) to a metal tube (5). The metal tube (5) is located around the basin, resting on the supporting angle bars (6). The metal tubes are secured by means of metal profiles (3, 18). The metal tube (5) is secured by metal profiles (3, 18) which are embedded in reinforced wells or footings (4) made of reinforced concrete that are offset with respect to the crown of the basin. As an alterative to the foundation well for basins with a size greater than 10,000 m², continuous perimetric foundation walls made of reinforced concrete (continuous footing) can be used.

The design and sizing of the anchoring elements can vary depending on each specific case: for example, metal runners (19) can be installed in the flanges of the profile (3, 18) instead of metal tube (5) when the basin has an almost exact rectangular shape, or wood posts can be used instead of metal profiles (3, 18). The perimetric anchor (2, 17) fulfills a secondary function in the system which is that of transmitting the tension generated by the support lines of the mesh to the foundation.

One of the key points of the system is the knots (20), because they will bear all the tension applied to the cables, transmitting it to the foundation (21). The design of the knots (20) optimizes performance by means of distributing the tension in the greatest possible length of the cable, preventing localized tension points. The knots (20) used make the "recoil" of the cable upon applying tension impossible, therefore it is assured that they never allow a tension loss.

The support lines have a calculated strength greater than 1,000 kg and a recommended tensile stress between 30%-40% of the calculated strength, to achieve a better long-term performance.

In a preferred embodiment, the shading mesh is formed by two layers (9, 10) that are sewn to one another at the longest sides, between which a synthetic line useful as an accessory rope for extending the intermediate supporting level is inserted. The upper layer (9) is formed by bands with different shading percentage, preferably three bands (11, 12, 13). The lower layer (10) is also formed by preferably three bands (14, 15, 16), which are arranged in a reversed manner to those of the upper layer and preferably with a different shading percentage.

In the upper layer (9), the bands (11, 13) with a lower void content are preferably two in number and are placed at the sides of the band (12) with a higher void content. In a first embodiment, the bands (11, 13) with a lower void content have an identical width, their width being smaller than the band (12) with a higher void content which is arranged between them.

The side bands (11, 13) of the upper layer (9) with a lower void content are formed by planar polyethylene strips crossing one another. The warp lines have a smaller width than the weft lines, the latter having two different widths. The weft lines are adjacently arranged, without leaving gaps between two weft lines. The different warp lines are not arranged contiguously since there is a gap between two continuous warp lines. The warp lines are intertwined with the weft lines above and under them in an alternate manner, thus weaving the side bands (11, 13) with a lower void content. Every two weft lines there are two lines with a circular section parallel to the weft lines, with a smaller size than the planar polyethylene strips that are twisted between them and which in turn are intertwined above and under with the warp lines in an alternate manner. A more closely-woven band is achieved by means of these lines with a circular section since movement of the warp and weft lines is not allowed.

The central band (12) of the upper layer (9) with a width greater than that of the side band (11, 13) has planar polyethylene strips in the form of warp lines with an identical width. These lines are separated a distance which is at least that of a warp line, therefore the warp lines in the band (12) with a higher void content are not contiguously arranged, there being a void between two warp lines. There are two lines with a circular section and a having a smaller size than the planar polyethylene strips intertwining with one another and which in turn are intertwined with the warp lines above and under them. These lines with a circular section are uniformly distributed in the entire width of the band (12) with a higher void content, the distance between lines with a circular section being that of approximately two weft lines as they are arranged in the bands with a lower void content. Consistency and certain rigidity is thus provided to the band with a higher void content by means of the assembly of lines with a circular section.

In the lower layer (10), the bands with a higher void content are preferably two (14, 16) in number and are located at the sides of the layer (15) with a lower void content in a reversed manner to the upper layer. The bands (14, 16) with a higher void content have a smaller width than the band (15) with a lower void content. In the lower layer (10), the side bands (14, 16) have a smaller width than the side bands of the upper layer and therefore the central band (15) has a smaller width than that of the upper layer. In the lower layer, the bands (14, 16) with a higher void content and the bands (15) with a lower void content have the same structural arrangement as those of the upper layer.

The thickness of the double layer of the shading mesh is 0.7 mm, with a unitary reduced weight of at least 87.5 gr/m²/layer, a tensile strength of at least 28 kN/m and an elongation for nominal tension of at least 25%.

## Claims

1. A fixed cover system for counteracting evaporation by means of shading the water stored in basins and tanks, of the type formed by at least one cloth forming a shading mesh and two frameworks of support lines at different levels (6, 7), one framework on the mesh and another framework under the mesh, secured by means of a perimetric anchor system, **characterized in that** it comprises a third framework of an intermediate support line (8) between the two layers of the shading mesh.

2. A system according to claim 1, **characterized in that** the intermediate support line is introduced between the two layers of the shading mesh by means of an auxiliary line.

3. A system according to claim 1, **characterized in that** the cloths forming the shading mesh overlap one another.

4. A system according to claim 1, **characterized in that** the cloths forming the shading mesh are joined at their sides.

5. A system according to claim 1, **characterized in that** the support lines (6, 7, 8) are made of a synthetic material.

6. A system according to claim 5, **characterized in that** said synthetic material lines (6, 7, 8) are high tenacity polyamide or polyester.

7. A system according to claim 1, **characterized in that** the support lines (6, 7, 8) have a combined section by means of braiding.

8. A system according to claim 1, **characterized in that** the support lines have a simple section.

9. A system according to claim 1, **characterized in that** the support lines have a juxtaposed section.

10. A system according to claim 1, **characterized in that** the perimetric anchor (2) is formed by fastenings (5) located around the basin (1) and resting on supporting angle bars (6) secured by metal profiles (3) which are embedded in reinforced concrete wells that are offset with respect to the crown of the basin.

11. A system according to claim 10, **characterized in that** the fastenings son metal tubes.

12. A system according to claim 10, **characterized in that** the fastenings are metal runners.

13. A system according to claim 1, **characterized in that** it comprises a perimetric curtain formed by the shading mesh and perimetrically closing the height between the shading mesh and the crown level of the basin, the perimetric curtain being tied by means of knots to the lines surrounding the basin at the upper and lower parts.

14. A shading mesh **characterized in that** it comprises at least two layers (9, 10) joined to one another between which a synthetic line useful as an accessory rope is located, the upper layer (9) being formed by bands (11, 12) with a high shading percentage contiguous to bands (12) with a high permeability to rainwater and the lower layer (10) being formed by bands (14, 15, v16) that are overlaid in a reversed manner to those of the upper layer.

15. A shading mesh for its use in a fixed shading cover system for counteracting evaporation according to claim 11, **characterized in that** the shading mesh is manufactured in polyethylene PE coated with carbon black.

16. A process for installing the fixed cover system, **characterized in that** the lower supporting level (6) is first placed, a higher density of lines being placed in the short direction, the lines in the long direction being supported on the lines of the short direction, the shading mesh cloths are then placed according to the short direction, the intermediate lines (8) are subsequently placed between the two shading mesh cloths by means of auxiliary lines located between the layers (9, 10) of the shading mesh and finally an assembly of lines (7) is placed above the shading mesh.
